# EUROPÄISCHE PATENTSCHRIFT

(11) **EP 0 391 250 B1**
(45) Veröffentlichungstag und Bekanntmachung des Hinweises auf die Patenterteilung: **21.09.1994**
(21) Anmeldenummer: 90105987.3
(22) Anmeldetag: 29.03.1990
(51) Int. Cl.: G05D 9/12

(54) **Vorrichtung zum Ableiten von Kondensat aus Drucksystemen oder dergleichen**
Device for draining off the condensate from pressure or related systems
Dispositif de dérivation de condensat dans les systèmes sous pression ou les systèmes comparables

(30) Priorität: 05.04.1989 DE 3910919
(43) Veröffentlichungstag der Anmeldung: 10.10.1990
(73) Patentinhaber: Koch, Berthold, D-41468 Neuss (DE)
(72) Erfinder: Koch, Berthold, D-41468 Neuss (DE)
(74) Vertreter: Türk, Gille, Hrabal, Leifert

(56) Entgegenhaltungen:
- DE-A- 3 149 830
- DE-B- 1 248 318
- US-A- 3 292 650

## Beschreibung

Die Erfindung betrifft eine Vorrichtung zum Ableiten von Kondensat aus Druckluftsystemen oder dergleichen mit den Merkmalen des Oberbegriffes des Patentanspruches 1.

In Druckluftsystemen fällt aus z.B. Wasser und Öl bestehendes Kondensat an, das im wesentlichen vom z.B. Schmiermittel der Kompressoren und dem Feuchtigkeitsgehalt des Gases herrührt. Dieses Kondensat ist in der Regel sehr agressiv und muß daher gesammelt und von Zeit zu Zeit aus dem an sich geschlossenen Druckgassystem abgelassen werden, ohne daß Gas oder Druckluft in spürbaren Mengen verlorengeht und der Druck im System spürbar sinkt.

Zur Ableitung derartiger Kondensate ist es bekannt, Schwimmer-Kondensatableiter zu benutzen, wobei hier die Gefahr besteht, daß es zu Verklebungen kommt und damit das Kondensat nicht mehr abgeleitet werden kann bzw. es zu dadurch bedingten Druckgasverlusten durch Abblasen des Druckgases kommt.

Bei einem bekannten Gerät der eingangs genannten Gattung (DE-A-31 49 830) werden diese Nachteile vermieden, so daß sich das Gerät grundsätzlich bewährt hat. Bei der Verwendung dieses Gerätes mit nur einem Sensor ist es notwendig, daß das Magnetventil, ausgelöst durch ein mittels dieses Sensors verursachten Signal, zeitgesteuert wird, so daß die Gefahr besteht, daß es auch hier zu Druckverlusten und damit zu hohen Energiekosten kommt. Bei der Verwendung dieses Gerätes mit wenigstens zwei Sensoren besteht der Nachteil, daß aufgrund des Platzbedarfes der Sensoren das Gerät relativ groß auszugestalten ist und so sowohl bei der Handhabung als auch Montage und bei der Anordnung platzbedingte Nachteile entstehen.

Bei einem anderen Gerät (US-A-3 292 650) werden zwei Sensoren in einem nach unten geschlossenen Rohr im parallelen Abstand zueinander angeordnet. Auch diese Konstruktion hat die oben beschriebenen Nachteile, da daß die Sensoren aufnehmende Rohr relativ breit gehalten sein muß.

Hinzu kommt, daß die Membran des Auslaßventils bei der Betätigung verhältnismäßig stark beansprucht wird und daß die Konstruktion insgesamt aufwendig ist.

Der Erfindung liegt die Aufgabe zugrunde, die Vorrichtung zum Ableiten von Kondensat der eingangs genannten Gattung derart zu verbessern, daß einerseits die Membran des Auslaßventils im Betrieb weniger beansprucht wird und andererseits die Vorrichtung einfacher aufgebaut, kompakter und daher preiswerter herzustellen ist.

Diese Aufgabe wird bei einer Vorrichtung der eingangs genannten Gattung mit den Merkmalen des kennzeichnenden Teiles des Patentanspruches 1 gelöst. Weitere vorteilhafte Ausgestaltungen der Erfindung sind Gegenstand der Unteransprüche.

Dadurch, daß der Fühler wenigstens zwei kapazitive unterschiedliche Füllstände erfassende Sensoren aufweist und mit einem einen Vorsteuerauslaß aus der Sammelkammer steuernden Steuerventil elektrisch verbunden ist und daß die Sensoren in einem senkrecht in die Sammelkammer ragenden, am äußeren Ende geschlossen Rohr im vertikalen Abstand voneinander angeordnet sind, ist es möglich, den Füllstand des in die Sammelkammer gelaufenen Kondensates wirksam mit nur einem in die Kammer hineinragenden Behältnis, in diesem Falle mit nur einem senkrecht in die Kammer hineinragenden zwei Sensoren aufweisenden rohrförmigen Meßfühler, der aus einem elektrisch nicht leitendem Material (Kunststoff oder Kermaik) besteht, wirksam zu überwachen, um das Auslaßventil zu steuern. Erreicht der Füllstand des Kondensats in der

Sammelkammer einen vorgegebenen Höchstwert bzw. ein vorgegebenes Maximum, wird das zur Steuerung des Membranventils vorgesehene Ventil eingeschaltet, damit sich das Membranventil öffnet, bis das in der Sammelkammer befindliche Kondensat abgelaufen ist. Der Meßfühler stellt das Absinken des Flüssigkeitspiegels in der Sammelkammer fest und löst, wenn er ein Minimum ermittelt hat, das Schließen des Membranventils aus. Dabei kann der Schließbefehl für das Membranventil mit einer vorgegebenen Zeitverzögerung nach Feststellen des tiefsten Kondensatspiegels gegeben werden, so daß der Meßfühler nicht bis auf die Höhe des tiefsten Kondensatspiegelstandes in die Sammelkammer hinein zu ragen braucht. Das Kondensatniveau im Behälter wird somit völlig verschleißfrei elektronisch kapazitiv erfaßt, so daß das Meßsystem ohne bewegliche Teile auskommt und einem Verkleben wirksam begegnet ist, wobei der Meßfühler auch reines Öl erfaßt und eine Abstimmung auf verschiedene Kondensate nicht notwendig ist.

Da der Meßfühler den maximalen Kondensatspiegelstand ermittelt, wird ein das Öffnen des Membranventils auslösendes Signal gegeben. Die bis zum Absinken des Kondensatspiegels auf den vom Fühler ermittelbaren Minimumstand ablaufende Zeit wird von der Meßelektronik erfaßt. Ist das Minimum erreicht, muß noch kein das Auslaßventil wieder schließendes Steuersignal gegeben werden. Vielmehr kann die vom Meßfühler ermittelte Zeit zwischen Maximum und Minimum in der Meßelektronik mit einem Faktor multipliziert werden, der sich aus dem Verhältnis der Höhe zwischen Minimum und Maximum und zwischen Minimum und dem gewünschten Tiefstniveau in der Sammelkammer ergibt. Dadurch wird die gesamte Öffnungszeit des Membranventils ermittelt. Nach Ablauf dieser Zeit gibt die Meßelektronik das Schließsignal.

Auf diese Weise ist es möglich, den Multiplikationsfaktor so zu wählen, daß das Ventil länger geöffnet bleibt als für das Ablassen des Kondensats notwendig. Dementsprechend strömt durch das Membranventil gegen Ende der Öffnungszeit Druckluft oder Druckgas aus dem Drucksystem, um Verunreinigungen im Auslaßbereich und insbesondere im Bereich des Membranventils abzublasen. Die Steuerung ist dabei so exakt und feinfühlig möglich, daß für die Reinigung keine größeren Mengen Druckmittel aus dem System ausströmen, da die Absinkgeschwindigkeit bis zum Minimumpunkt elektronisch erfaßt wird und mittels des gemessenen Wertes die maximal notwendige Ventilöffnungszeit errechnet wird.

Weist das Fühler rohr zwei kapazitive Sensoren auf, so ist dadurch gewährleistet, daß der den maximalen Füllstand messende Sensor wie auch der das Endsignal gebende zweite Sensor platzsparend angeordnet ist, ohne daß eine zweite, die Positionierung des zweiten Sensors ermöglichende Öffnung im Gehäuse vorzusehen ist.

Ist das die kapazitiven Sensoren umhüllende Rohr senkrecht in die Sammelkammer ragend angeordnet, so ist dadurch gewährleistet, daß der in dem Gehäuse befindliche Füllstand des Kondensats stets optimal gemessen werden kann.

Sind die Sensoren in einem vertikalen Abstand zueinander angeordnet, so ist es möglich, ein vorbestimmtes Maximum oder Minimum des Kondensatspiegels zu erfassen, ohne daß eine Anordnung der Sensoren nebeneinander, d.h. außerhalb einer co-axialen Ausrichtung, vonnöten ist, so daß eine äußerst platzsparende Anordnung gewährleistet wird.

Dadurch, daß das dem geschlossenen Ende gegenüberliegende Ende des Rohres mit einem eine elektronische Steuerung beinhaltenden Gehäuse verbunden ist, bildet das die elektronische Steuerung beinhaltende Gehäuse und das mit ihr verbundene Rohr sowie die darin enthaltenen Sensoren und die elektronische Steuerung eine Baueinheit, die zum einen dadurch kompakt erstellt werden kann und zum anderen auf einfache Art und Weise auszuwechseln bzw. zu warten ist, ohne daß ein großer Arbeitsaufwand vonnöten ist.

Ragt lediglich der. die Sensoren aufweisende Teil des zu der Baueinheit gehörenden Rohres in das Gehäuseinnere hinein, so kann dieses relativ klein bzw. ebenfalls kompakt ausgestaltet werden, ohne daß zur Unterbringung der Baueinheit innerhalb des Gehäuses besondere konstruktive Merkmale vorzusehen sind.

Weist der Einlaß in die Kammer des Steuerventils einen geringeren Querschnitt als deren Auslaß auf und ist die Kammer des Steuerventils mit der Rückseite der Membran des Membranventils dauernd verbunden, so ist dadurch gewährleistet, daß eine Vorsteuerung geschaffen ist, die es ermöglicht bei Bedarf die Membran öffnen zu können, ohne daß es hierbei zu einer plötzlichen Druckveränderung und damit ruckartigen Bewegungen der Membran kommt, so daß einer frühzeitigen Verschleißerscheinung wirksam entgegengewirkt wird und zum anderen gewährleistet ist, daß zur Steuerung der Membran die Verbindung zwischen der Sammelkammer und der Steuerventilkammer nicht gesondert unterbrochen werden muß.

Ist vor der Verbindungsleitung zwischen der Sammelkammer und der Auslaßkammer ein Kragen oder eine Prallplatte oder Prallwand angeordnet, verhindert man wirksam, daß beim Ablassen des Kondensats am Boden der Sammelkammer angefallene Verunreinigungen aufgewirbelt und mit dem Kondensat ausgetragen werden. Solche Verunreinigungen können unter Umständen das Membranventil bzw. die Auslaßleitung in einer Weise verstopfen und zusetzen, daß auch mit nachgeblasenem Druckmittel keine befriedigende Reinigung mehr möglich ist bzw. erzielt wird.

Weitere Merkmale und Vorteile der Erfindung ergeben sich aus der nachfolgenden Beschreibung und der Zeichnung.

In der Zeichnung sind zwei Ausführungsbeispiele der erfindungsgemäßen Vorrichtung zum Ableiten von Kondensat aus Drucksystemen dargestellt, und zwar zeigt
- Figur 1: einen senkrechten Schnitt durch die Vorrichtung nach einer ersten Ausführungsform, wobei das Membranventil sich in der Schließposition befindet, welche es normalerweise einnimmt,
- Figur 2: einen Teilschnitt der Vorrichtung aus Figur 1, wobei das Membranventil geöffnet dargestellt ist, und
- Figur 3: einen senkrechten Schnitt durch die Vorrichtung nach einer zweiten Ausführungsform, wobei sich das Membranventil in der Schließposition befindet.

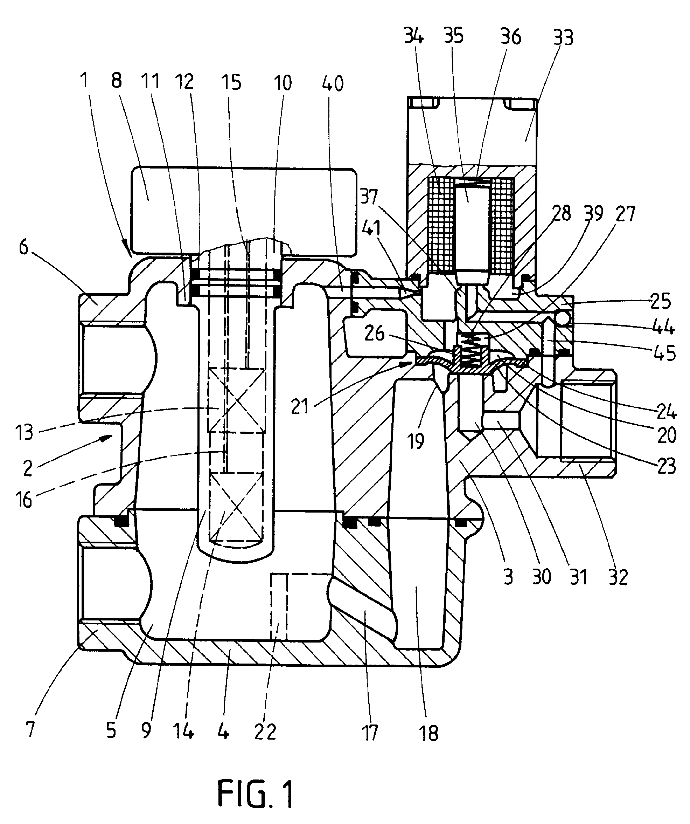

Die in Figur 1 gezeigte Vorrichtung (1) zum Ableiten von Kondensat aus Drucksystemen wie Druckluft- oder Druckgassystemen hat ein Gehäuse (2) mit einem Oberteil (3) und einem Unterteil (4), das eine Sammelkammer (5) für Kondensat enthält. Das Oberteil (3) ist mit einem Anschlußstutzen (6) und das Unterteil mit einem Anschlußstutzen (7) versehen, die beide in die Sammelkammer (5) münden und zum Anschließen an ein nicht dargestelltes Drucksystem dienen. Normalerweise wird der Anschlußstutzen (6) als Einlaß benutzt, so daß der Anschlußstutzen (7) mittels eines nicht dargestellten Stopfens oder einer ebenfalls nicht dargestellten Kappe druck- und flüssigkeitsdicht verschlossen wird, jedoch ist es auch möglich, den Anschlußstutzen (7) als Einlaß zu benutzen. An den Anschlußstutzen (6) wird dann eine Be- und Entlüftungsleitung angeschlossen. Diese wird an das gleiche Druckpotential, aus dem das Kondensat entfernt wird, zurückgeführt.

Auf die Oberseite des Oberteiles (3) ist eine elektronische Steuerung (8) aufgesetzt, welche ein am unteren Ende geschlossenes, von oben in die Sammelkammer (5) hineinragendes Meßfühlerrohr aufweist, das mit einem zylindrischen Schaft aus gegenüber der Sammelkammer (5) nicht leitendem Material (z.B. Kunststoff oder Keramik) in einem Stutzen (11) des Oberteiles (3) des Gehäuses (2) steckt und mittels Dichtungsringen (12) gegenüber dem Stutzen (11) abgedichtet ist.

Im Meßfühlerrohr (9) sind übereinander zwei kapazitive Sensoren (13, 14) angeordnet, die jeweils über elektrische Leitungen (15 bzw. 16) mit der elektronischen Steuerung (8) elektrisch verbunden sind, d.h. das Kondensatniveau im Behälter völlig verschleißfrei elektronisch kapazitiv erfassen. Der obere Sensor (13) dient dem Erfassen des höchstzulässigen Standes des Kondensatspiegels in der Sammelkammer (5), während der untere Sensor (14) die Minimumanzeige liefert, damit die elektronische Steuerung (8) die gewünschten Steuersignale zum Öffnen und Schließen des Auslaßventiles abgeben kann.

Die Sammelkammer (5) ist durch einen abfallenden Kanal (17) mit einer Auslaßkammer (18) verbunden, die am oberen Ende eine Öffnung (19) enthält, die in die Kammer (20) eines Membranventils (21) führt.

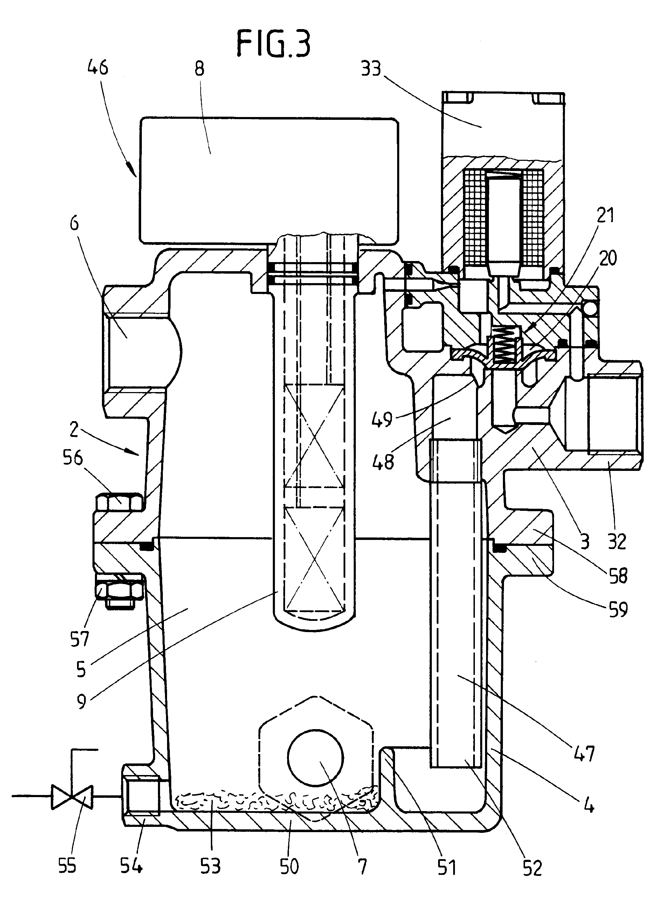

In der Sammelkammer (5) können vom Boden keine Partikel abgesaugt werden, da die Einmündung des Auslaufkanales (17) höher liegt. Wenn die Mündung des Kanales (17) tiefer liegt und der Auslaß nicht über eine Ablaßkammer (18), sondern über ein Steigrohr (47) erfolgt (wie in Figur 3 dargestellt), so kann vor der Mündung oder vor dem Ansaugende des Steigrohres eine Kammer (22), Prallplatte oder Prallwand angeordnet werden, um zu verhindern, daß beim Ablassen von Kondensat aus der Sammelkammer am Boden derselben abgelagerte Verunreinigungen aufgewirbelt und mit Kondensat oder nachströmendem Druckmittel ausgetragen werden, welche die Auslaßleitung und/oder das Membranventil (21) verstopfen oder sonstwie funktionsunfähig machen können.

Das Membranventil (21) weist eine flexible Membran (23) auf, die mit ihrem äußeren Rand (24) zwischen dem Oberteil (3) des Gehäuses (2) und einem Aufsatzstück (25), das auf dem Oberteil (3) befestigt ist, eingeklemmt ist. Mit einem zentral angeordneten Hals (26) ist die Membran zentriert, wobei dieser Hals (26) in einem Sackloch (27) des Aufsatzstückes (25) verschiebbar geführt ist. Auf die Membran (23) wirkt eine Schraubenfeder (28), welche im Hals (26) angeordnet ist und sich am Boden des Sackloches (27) abstützt.

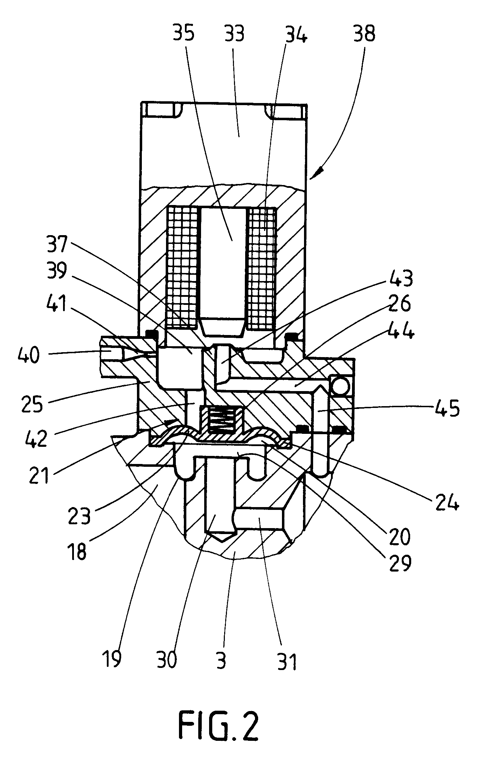

Beim Lüften der Membran (23) von der Ventilsitzfläche (29) in die in Figur 2 gezeigte Position muß der Druck der Schraubenfeder (28) überwunden werden.

Von der Ventilsitzfläche (29) erstreckt sich eine blinde Bohrung (30) im Oberteil (3) nach unten, von der eine Querbohrung (31) in einen Auslaßstutzen (32) führt. An den Auslaßstutzen (32) kann eine nicht dargestellte Ablaßleitung angeschlossen werden. Im Auslaßstutzen (32) herrscht Normaldruck, während in der Sammelkammer (5) im Betrieb der überatmosphärische Druck des Drucksystems aufrechterhalten wird.

Auf das Aufsatzstück (25) ist ein Elektromagnet (33) aufgesetzt, der eine elektrische Spule (34) und einen Magnetkern (35) aufweist. An dem oberen Ende des Magnetkernes (35) liegt eine Druckfeder (36) an, welche den Magnetkern (35) nach unten gegen das Aufsatzstück (25) drückt.

Der Elektromagnet (33) wird von der Steuerung (8) betätigt.

Wird die Spule (34) von elektrischem Strom durchflossen, zieht sie den Magnetkern (35) an, so daß dieser in die in Figur 2 gezeigte Position angehoben wird. Bei stromloser Spule (34) befindet sich der Magnetkern (35) in der in Figur 1 gezeigten Position, in welcher er auf einem Ansatz (37) des Aufsatzstückes (25) liegt und auf diesen von der Druckfeder (36) sowie vom Überdruck gedrückt wird.

Der Elektromagnet (33) bildet zusammen mit dem Aufsatzstück (25) ein Steuerventil (38), mit dessen Hilfe das Membranventil (21) betätigt wird.

Zwischen dem Elektromagneten (33) und dem Aufsatzstück (25) befindet sich eine Kammer (39) in die ein vom oberen Ende der Sammelkammer (5) ausgehender Kanal (40) mündet, der eine gerade Führung aufweist, d.h. dessen den Kanal bildende Flächen weder Ecken noch Kanten aufweisen an die sich z.B. Schmutz festsetzten könnte. Das in die Kammer (39) mündende Ende (41) des Kanals (40) ist nach Art einer Venturi-Düse verengt bzw. verjüngt. Auch der Übergang zwischen dem nach Art einer Venturi-Düse ausgebildeten Ende (41) und dem Kanal (40) weist keinerlei Vorsprünge, Ecken oder Kanten auf.

Die Kammer (39) steht über eine senkrechten Kanal (42) mit der Kammer (20) des Membranventils (21) in Verbindung, so daß der in der Kammer (39) herrschende Druck auch auf die Oberseite der Membran (23) wirkt. Im Ansatz (37) des Aufsatzstückes (25) befindet sich eine zentrale Bohrung (43), die über zwei aneinander anschließende Querbohrungen (44, 45) mit dem Auslaßstutzen (32) verbunden ist.

Das Aufsatzstück (25), und hier speziell der Ansatz (37) mit der darin vorgesehenen Bohrung (43), bildet zusammen mit dem Magnetkern (35) des Elektromagneten (33) das Steuerventil (38).

Die in Figur 1 und 2 dargestellte Vorrichtung zum Ableiten von Kondensat aus Drucksystemen arbeitet folgendermaßen:

Im Normalfall befinden sich die einzelnen Teile der Vorrichtung (1) in den in Figur 1 dargestellten Positionen. In der Sammelkammer (5) herrscht der überatmosphärische Druck des Drucksystems, an welches die Vorrichtung angeschlossen ist. Dieser Druck herrscht auch in der Auslaßkammer (18), und zwar wegen der Verbindung über den Kanal (17), und in der Kammer (39), welche durch den ständig offenen Vorsteuerkanal (40) mit der Sammelkammer (5) in Verbindung steht. Daher wirkt der überatmosphärische Druck auch auf die Oberseite der Membran (23), weil der Kanal (42) eine ständige offene Verbindung von der Kammer (39) zur Kammer (20) des Membranventiles (21) herstellt. Daher wird die Membran (23) , unterstützt von der Schraubenfeder (28) fest auf die Ventilsitzfläche (29) gedrückt. Der Elektromagnet (33) ist stromlos, so daß sein Magnetkern (35) auf dem Ansatz (37) aufliegt und auf diesen ebenfalls vom Überdruck, unterstützt durch die Druckfeder (36), gedrückt wird. Beide Ventile (21, 38) sind geschlossen, so daß aus dem Drucksystem in die Sammelkammer (5) fließendes Kondensat dort verbleibt.

Durch die Eintrittsöffnung der Sammelkammer (5) sammelt sich Kondensat im Gehäuse (2). Ist der Flüssigkeitsspiegel des in die Sammelkammer (5) gelaufenen Kondensats bis zur maximalen Höhe angestiegen, so daß der kapazitive Niveausensor (13) des Meßfühlerrohres (9) ein entsprechendes elektrisches Signal auslöst und an die elektronische Steuerung (8) meldet, gibt diese ein Steuersignal ab, welches den Elektromagneten (33) einschaltet. Die nunmehr stromführende Spule (34) zieht den Magnetkern (35) an, so daß dieser vom Ansatz (37) abgehoben wird und in der in Figur 2 gezeigten Position verbleibt. Dadurch wird die Bohrung (43) freigelegt, so daß eine Verbindung von der Kammer (39) in den Auslaßstutzen (32) hergestellt wird. Da in der Kammer (39) überatmosphärischer Druck herrscht, im Auslaßstutzen (32) jedoch atmosphärischer Druck, strömt Druckmittel, nämlich Luft oder Gas, aus der Kammer (39) in den Auslaßstutzen (32), wodurch der Druck in der Kammer (39) und damit der auf die Oberseite der Membran (23) wirkende Druck abgebaut wird. Durch den Kanal (40) strömt zwar Druckmittel aus der Sammelkammer (5) nach, jedoch kann dadurch der Druckabbau in der Kammer (39) nicht ausgeglichen werden, weil der Ausströmquerschnitt der Bohrung (43) größer gewählt ist als der Einströmquerschnitt des verengten Endes (41) des Kanales (40). Auf die Unterseite der Membran (43) wirkt aber nach wie vor der überatmosphärische Druck der Sammelkammer (5), was nunmehr dazu führt, daß die Membran (23) nach oben gedrückt und damit von der Ventilsitzfläche (29) abgehoben wird. Durch die Öffnung (19) strömt Kondensat aus der Auslaßkammer (18) in die Kammer (20) und aus dieser durch die Bohrung (30, 31) in den Auslaßstutzen (32).

Die Anordnung ist so gewählt, daß der Druck in der Kammer (39) geringer als der auf die Unterseite der Membran (23) wirkende Druck ist, solange das Steuerventil (38) geöffnet und dementsprechend der Magnetkern (35) von dem eine Ventilsitzfläche bildenden Ansatz (37) abgehoben und gelüftet ist. Dementsprechend bleibt das Membranventil (21) offen, solange das Steuerventil (38) geöffnet ist, so daß das Magnetventil mit Druckluft oder Druckgas durchströmt und damit gespült werden kann.

Nach Ablauf der vorbestimmten Öffnungszeit des Membranventils (21) liefert die Steuerung (8) ein Signal, das zum Ausschalten des Elektromagneten (33) führt. Dadurch fällt der Magnetkern (35) aus der angehobenen Position auf den Ansatz (37) und wird auf diesen Ansatz (37) von der Druckfeder (36) gedrückt, was zum Schließen des Steuerventils (38) führt, so daß die Bohrung (43) geschlossen ist und durch dieselbe kein Druckmittel mehr ausströmen kann. Vom durch den Kanal (40) aus der Sammelkammer (5) nachströmenden Druckmittel wird Druck in der Kammer (39) aufgebaut, bis der in der Sammelkammer (5) herrschende überatmosphärische Druck erreicht ist. Über die Verbindung durch den Kanal (42) wirkt dieser Druck nunmehr wieder auf die Oberseite der Membran (23), so daß die Membran (23) aufgrund dieses Druckes und des zusätzlichen Druckes der Schraubenfeder (28) in die Schließposition gemäß Figur 1 gedrückt wird und damit das Membranventil (21) geschlossen ist. Dann kann kein weiteres Druckmittel oder Kondensat aus der Sammelkammer (5) ausströmen, bis das Steuerventil (38) wieder geöffnet wird.

Bei dieser Ausführungsform wird die nach Erzeugen des Maximumsignales durch den ersten Sensor (13) bis zum Erzeugen des vom zweiten, unterhalb des ersten Sensors angeordneten Sensor (14) erzeugten Minimumssignals ablaufende Zeit ermittelt und von der mit den beiden Sensoren über elektrische Leitungen (15, 16) verbundenen elektronischen Steuerung erfaßt. Ist das Minimum erreicht, wird noch kein das Auslaßventil (21) wieder schließendes Steuersignal gegeben. Vielmehr wird die vom Meßfühler ermittelte Zeit zwischen Maximum und Minimum in der Meßelektronik (8) mit einem Faktor multipliziert, der sich aus dem Verhältnis der Höhe zwischen Minimum und Maximum und zwischen Minimum und dem gewünschten Tiefstniveau in der Sammelkammer (5) ergibt. Dadurch wird die gesamte Öffnungszeit des Membranventiles (21) ermittelt. Nach Ablauf dieser Zeit gibt die Meßelektronik (8) das Schließsignal.

Die in Figur 3 dargestellte Vorrichtung (46) zum Ableiten von Kondensat aus Drucksystemen stimmt im Aufbau und der Funtionsweise weitgehend mit der in Figur 1 und Figur 2 dargestellten Vorrichtung überein. Daher sind gleiche Teile mit gleichen Positionsziffern bezeichnet und nachfolgend im einzelnen nicht näher beschrieben, um Wiederholungen zu vermeiden.

Der wesentlichste Unterschied besteht darin, daß zum Ablassen des Kondensats aus der Sammelkammer (5) am Oberteil (3) des Gehäuses (2) ein Steigrohr (47) angeordnet ist, das im Sackloch (48) eingesetzt ist. Das Sackloch (48) mündet über eine Öffnung (49) in die Kammer (20) des Membranventils (21).

Am Boden (50) des Unterteiles (4) ist ein in das Innere der Sammelkammer (5) ragender hochstehender Kragen (51) angeformt, in den das untere Ende (52) des Steigrohres (47) hineinragt.

Außerhalb des eine Art Trog oder Becken bildenden Kragens (51) kann sich auf dem Boden (50) des Unterteiles (4) Schmutz (53) ansammeln, der von Zeit zu Zeit durch einen Stutzen (54) mittels eines beispielsweise von Hand zu betätigenden Absperrventiles (55) abgeblasen werden kann, bevor er in Höhe des Anschlußstutzens (7) angestiegen ist.

Figur 3 zeigt auch, daß Oberteil (3) und Unterteil (4) des Gehäuses (2) über Schraubenbolzen (56) und Muttern (57), welche durch aufeinanderliegende Flansche (58, 59) gesteckt sind, lösbar aneinander befestigt werden.

Wird ein festgelegtes Zeitintervall zwischen dem ersten Maximumsignal und dem zweiten durch den unteren Sensor ausgelösten Minimumsignal überschritten, z.B. 60 Sekunden, so wird durch die elektronische Steuerung (8) ein sogenannte Alarmsteuerung ausgelöst. Das Magnetventil wird abgeschaltet. In diesem Zustand wird das Magnetventil alle vier Minuten für fünf Sekunden geöffnet.

## Patentansprüche

1. Vorrichtung zum Ableiten von Kondensat aus Druckluftsystemen oder dergleichen, mit einer an das Druckluftsystem dauernd angeschlossenen Sammelkammer (5) für Kondensat und mit einem den Auslaß der Sammelkammer (5) verschließenden Membranventil (21), wobei in der Sammelkammer (5) zwei kapazitive unterschiedliche Füllstände erfassende, das Membranventil (21) über eine Elektronik (8) und ein Steuerventil (38) steuernde Sensoren (13, 14) angeordnet sind, **dadurch** **gekennzeichnet** daß die Sensoren (13,14) in einem senkrecht in die Sammelkammer (5) ragenden, am äußeren Ende geschlossenen Rohr (9) in einem vertikalen Abstand zueinander angeordnet sind, die mit einem einen Vorsteuerauslaß (40,41,39,43,44,45), aus der Sammelkammer (5) steuernden Steuerventil (38) elektrisch verbunden sind und daß der Einlaß (40,41) in die Kammer (39) des Steuerventiles (38) einen geringeren Querschnitt als deren Auslaß (43) aufweist.

2. Vorrichtung nach Anspruch 1, dadurch gekennzeichnet, daß lediglich der die Sensoren aufweisende Teil des zu einer aus dem die Sensoren aufnehmenden Rohr (9) und der elektronischen Steuerung (8) bestehenden Baueinheit in das Gehäuseinnere (5) hineinragt.

3. Vorrichtung nach Anspruch 1, dadurch gekennzeichnet, daß die Kammer (39) des Steuerventiles (38) mit der Rückseite der Membran (23) des Membranventiles (21) dauernd verbunden ist.

4. Vorrichtung nach Anspruch 1, dadurch gekennzeichnet, daß die Membran (23) des Membranventiles (21) von einer sie in deren Schließstellung drückenden Feder (28) beaufschlagt ist.

5. Vorrichtung nach einem der Ansprüche 1 bis 4, dadurch gekennzeichnet, daß mit der Sammelkammer (5) eine zum Membranventil (21) führende Auslaßkammer (18) verbunden ist.

6. Vorrichtung nach Anspruch 5, dadurch gekennzeichnet, daß vor der Verbindung (17) zwischen Sammelkammer (5) und Auslaßkammer (18) ein Kragen (22) angeordnet ist.

7. Vorrichtung nach einem der Ansprüche 1 bis 6, dadurch gekennzeichnet, daß das untere Ende (52) des von der Sammelkammer (5) zum Membranventil (21) führenden Steigrohres (47) in einen am Boden (50) des Unterteiles (4) in das Innere der Sammelkammer (5) ragenden hochstehenden Kragen (51) hineinragt.

## Claims

1. Apparatus for draining condensate from a compressed air system or the like, with a collecting chamber (5) for condensate permanently connected to the compressed air system and with a diaphragm valve (21) closing off the outlet of the collecting chamber, in the collecting chamber sensors (13, 14) being provided which monitor solely two capacitive different filling levels and control the diaphragm valve by way of electronics and the control valve, characterised in that the sensors (13, 14) are located at a vertical distance apart in a tube (9) projecting perpendicularly into the collecting chamber (5) and closed at the outer end, which sensors are connected electrically to a control valve (38) controlling a preliminary control outlet (40, 41, 39, 43, 44, 45) from the collecting chamber (5) and that the inlet (40, 41) into the chamber (39) of the control valve (38) has a smaller cross-section than its outlet (43).

2. Apparatus according to Claim 1, characterised in that solely the part comprising the sensors of the component consisting of the tube (9) receiving the sensors and the electronic control (8) projects into the inside of the housing (5).

3. Apparatus according to Claim 1, characterised in that the chamber (39) of the control valve (38) is permanently connected to the rear side of the diaphragm (23) of the diaphragm valve (21).

4. Apparatus according to Claim 1, characterised in that the diaphragm (23) of the diaphragm valve (21) is acted upon by a spring (28) pushing it into its closed position.

5. Apparatus according to one of Claims 1 to 4, characterised in that an outlet chamber (18) leading to the diaphragm valve (21) is connected to the collecting chamber (5).

6. Apparatus according to Claim 5, characterised in that a collar (22) is located in front of the connection (17) between the collecting chamber (5) and outlet chamber (18).

7. Apparatus according to one of Claims 1 to 6, characterised in that the lower end (52) of the ascending tube (47) leading from the collecting chamber (5) to the diaphragm valve (21), projects into an upright collar (51) projecting into the inside of the collecting chamber (5) on the base (50) of the lower part (4).

## Revendications

1. Dispositif d'évacuation de condensat de systèmes à air comprimé ou analogues, comprenant une chambre (5) collectrice de condensat qui est raccordée en permanence au système à air comprimé, ainsi qu'une soupape à diaphragme (21) obturant la sortie de la chambre collectrice, seuls deux détecteurs capacitifs (13, 14) détectant des niveaux différents de remplissage et commandant la soupape à diaphragme au moyen d'un circuit électronique ainsi que de la soupape de commande étant disposés dans la chambre collectrice, caractérisé en ce que les détecteurs (13, 14) sont disposés à distance verticale l'un par rapport à l'autre dans un tube (9) qui pénétre verticalement dans la chambre collectrice (5) et dont l'extrémité extérieure est fermée et sont connectés électriquement à une soupape de commande (38) qui commande une sortie pilote (40, 41, 39, 43, 44, 45) arrivant de la chambre collectrice (5) et en ce que l'entrée (40, 41) dans la chambre (39) de la soupape de commande (38) a une section plus faible que sa sortie (43).

2. Dispositif selon la revendication 1, caractérisé en ce que la partie du module se composant du tube (9) logeant les détecteurs et de la commande électronique (8) qui comporte les détecteurs est la seule à pénétrer à l'intérieur (5) du boîtier.

3. Dispositif selon la revendication 1, caractérisé en ce que la chambre (39) de la soupape de commande (38) est reliée en permanence au côté arrière du diaphragme (23) de la soupape à diaphragme (21).

4. Dispositif selon la revendication 1, caractérisé en ce que le diaphragme (23) de la soupape à diaphragme (21) est soumis à la force d'un ressort (28) qui le pousse à sa position de fermeture.

5. Dispositif selon l'une des revendications 1 à 4, caractérisé en ce qu'une chambre de sortie (18) menant à la soupape à diaphragme (21) est reliée à la chambre collectrice (5).

6. Dispositif selon la revendication 5, caractérisé en ce qu'un col (22) est disposé en amont de la liaison (17) entre la chambre collectrice (5) et la chambre de sortie (18).

7. Dispositif selon l'une des revendications 1 à 6, caractérisé en ce que l'extrémité inférieure (52) du tube montant (47) menant de la chambre collectrice (5) à la soupape à diaphragme (21) pénètre à l'intérieur d'un col (51) orienté vers le haut, situé au fond (50) de la partie inférieure (4) et entrant à l'intérieur de la chambre collectrice (5).
